# EUROPÄISCHE PATENTSCHRIFT

(11) **EP 3 324 001 B1**
(45) Veröffentlichungstag und Bekanntmachung des Hinweises auf die Patenterteilung: **29.05.2019**
(21) Anmeldenummer: 17198758.9
(22) Anmeldetag: 27.10.2017
(51) Int. Cl.: F01D 11/00

(54) **DICHTUNGSANORDNUNG FÜR EINE LEITSCHAUFELANORDNUNG EINER GASTURBINE**
SEALING ASSEMBLY FOR A VANE ARRANGEMENT OF A GAS TURBINE
AGENCEMENT DE JOINT D'ÉTANCHÉITÉ POUR UN ENSEMBLE D'AUBES DE GUIDAGE D'UNE TURBINE À GAZ

(30) Priorität: 17.11.2016 DE 102016222608
(43) Veröffentlichungstag der Anmeldung: 23.05.2018
(73) Patentinhaber: MTU Aero Engines AG, 80995 München (DE)
(72) Erfinder: Klingels, Hermann, 85221 Dachau (DE)

(56) Entgegenhaltungen:
- EP-A1- 1 847 687
- EP-A1- 2 696 039
- DE-A1-102013 209 746
- GB-A- 1 322 801
- GB-A- 2 022 720
- US-A- 3 018 085
- US-A- 4 721 434
- US-A1- 2009 246 014
- US-A1- 2014 105 725

## Beschreibung

Die vorliegende Erfindung betrifft eine Dichtungsanordnung für eine Leitschaufelanordnung einer Gasturbine, insbesondere Fluggasturbine, vorzugsweise einer Niederdruckturbine einer Gasturbine, mit einem Dichtungsträger, wobei der Dichtungsträger einen sich in Axialrichtung und Umfangsrichtung erstreckenden Ringabschnitt aufweist, an dem ein radial inneres Dichtungselement angeordnet ist, und einen ersten Flanschabschnitt und einen zweiten Flanschabschnitt aufweist, die sich in Umfangsrichtung und Radialrichtung vom Ringabschnitt nach außen erstrecken und in Axialrichtung zueinander in einem Abstand angeordnet sind, und mit einem Innendeckbandabschnitt von wenigstens einer Leitschaufel oder von wenigstens einem Leitschaufelsegment der Leitschaufelanordnung, wobei der Innendeckbandabschnitt einen sich in Radialrichtung nach innen und in Umfangsrichtung erstreckenden Dichtabschnitt aufweist, wobei der Dichtabschnitt zwischen dem ersten Flanschabschnitt und dem zweiten Flanschabschnitt des Dichtungsträgers aufgenommen ist und mit diesen verbunden ist.

Der sich in Axialrichtung und in Umfangsrichtung erstreckende Ringabschnitt des Dichtungsträgers weist dabei vorzugsweise die Form eines in sich geschlossenen Rings auf. Der Begriff "Abschnitt" in dem Wort "Ringabschnitt" bezieht sich auf einen Abschnitt des Dichtungsträgers und bedeutet nicht, dass der Ringabschnitt aus in Umfangsrichtung segmentierten Einzelteilen bestehen soll, auch wenn eine solche Bauart nicht zwingend ausgeschlossen ist. Ferner bedeutet der Begriff "verbunden" im oben genannten Zusammenhang nicht, dass keinerlei Relativbewegungen zwischen dem ersten Flanschabschnitt und dem zweiten Flanschabschnitt des Dichtungsträgers einerseits und dem Dichtungsabschnitt andererseits möglich ist. Vielmehr kann eine solche Relativbewegung, insbesondere in radialer Richtung möglich sein, beispielsweise mittels einer speichenzentrierten Lagerung. Den Dichtungsträger könnte man auch als statisches Dichtungsteil bezeichnen.

Richtungsangaben wie "Axial-" bzw. "axial", "Radial-" bzw. "radial" und "Umfangs-" sind grundsätzlich auf die Maschinenachse der Gasturbine bezogen zu verstehen, sofern sich aus dem Kontext nicht explizit oder implizit etwas anderes ergibt.

Eine derartige Dichtungsanordnung, die auch als Zwischenstufendichtung bezeichnet werden kann, ist beispielsweise bekannt aus der EP 2 696 039 A1. Bei der dort offenbarten Dichtungsanordnung wird im Betrieb der erste Flanschabschnitt aufgrund der Druckverhältnisse in der Turbine gegen den Dichtabschnitt des Innendeckbandabschnitts gepresst, so dass eine sekundäre Dichtstelle gebildet wird. Aufgrund der Druckverhältnisse (Druckdifferenz über die Leitschaufelanordnung) und vorhandenen Fertigungstoleranzen kann aber dennoch heißes Arbeitsmedium durch die sekundäre Dichtstelle strömen. Hierdurch werden bei der Inbetriebnahme der Strömungsmaschine insbesondere die beiden sich nach radial außen erstreckenden Flanschabschnitte des Dichtungsträgers und somit der Dichtungsträger selbst aufgeheizt, wodurch sich dessen Durchmesser vergrößert. Hierdurch wird ein Abstand von dem radial innen liegenden Dichtelement zu rotorseitigen Dichtvorsprüngen, die gemeinsam eine primäre Dichtstelle bilden, größer, so dass deren Dichtwirkung sich verschlechtert. Die rotorseitigen Dichtvorsprünge können auch Dichtspitzen genannt werden.

Aufgabe der Erfindung ist es, eine Dichtungsanordnung bereitzustellen, bei der die genannten Nachteile vermieden werden können.

Zur Lösung dieser Aufgabe wird vorgeschlagen, dass die Dichtungsanordnung wenigstens ein in Bezug auf die Hauptströmungsrichtung eines Arbeitsmediums vor dem ersten Flanschabschnitt angeordnetes scheibenartiges erstes Dichtmittel aufweist, gemäß den Merkmalen des kennzeichnenden Teils des ersten Anspruchs.

Das erste Dichtmittel bildet somit eine Art Abdeckung des ersten Flanschabschnitts, so dass dieser nicht unmittelbar dem heißen Strom von Arbeitsmedium ausgesetzt ist. Ferner bildet das freie Ende zusammen mit dem Dichtabschnitt des Innendeckbandabschnitts eine sogenannte sekundäre Dichtstelle, ohne dass für die Dichtwirkung der erste Flanschabschnitt erforderlich ist. Das scheibenartige erste Dichtmittel kann auch als Dichtscheibe bezeichnet werden. Der Begriff "radial äußeres freies Ende" bedeutet im Sinne der vorliegenden Erfindung nicht, dass damit zwingend das radial äußere Ende des ersten Dichtmittels gemeint ist. Vielmehr ist darunter ein Abschnitt des ersten Dichtmittels zu verstehen, welcher radial außen von dem Abschnitt, mit welchem es wenigstens teilweise am ersten Flanschabschnitt anliegt, angeordnet ist, und welcher eine Art Dichtkante aufweist zwecks Bildung der sekundären Dichtstelle. Das erste Dichtmittel kann sich aber radial noch weiter nach außen über diese Dichtkante hinweg erstrecken.

Das erste Dichtmittel weist radial außen einen gebogenen Abschnitt auf, derart dass ein radial äußerer Endabschnitt, der das freie Ende enthält, im Wesentlichen in Axialrichtung verläuft. Das erste Dichtmittel ist also in der Art einer Dichtscheibe ausgebildet, wobei der radial äußere Rand bzw. das radial äußere freie Ende zum Dichtabschnitt des Innendeckbandabschnitts hin gebogen ist. Mit anderen Worten liegt das das freie Ende des ersten Dichtmittels am Dichtabschnitt an, so dass keine vollständige flächige Anlage des ersten Dichtmittels vorliegt. Damit die Dichtwirkung des ersten Dichtmittels weiter verbessert wird, ist das erste Dichtmittel derart vorgespannt, dass es sicher gegen den Dichtabschnitt gepresst wird, insbesondere auch dann, wenn der Druck des umgebenden Arbeitsmediums nicht so hoch ist.

Ferner ist der radial äußere Endabschnitt in Axialrichtung so dimensioniert, dass das erste Dichtmittel radial außen weiter von dem ersten Flanschabschnitt entfernt ist als radial innen. Dabei wird in Radialrichtung zwischen dem ersten Flanschabschnitt und dem gebogenen Abschnitt des ersten Dichtmittels ein Freiraum gebildet. In diesem Freiraum kann sich ein eigenes Druckniveau einstellen. Da auch die sekundäre Dichtstelle der erfindungsgemäßen Dichtungsanordnung in der Regel den Eintritt von heißem Arbeitsmedium nicht vollständig verhindern kann, ist es vorteilhaft, eine Kühlluftzufuhr zu diesem Freiraum vorzusehen. Somit gelangt das heiße Arbeitsmedium erst nach Passage der sekundären Dichtstelle in einen Bereich der Dichtungsanordnung, in dem es mit dem ersten Flanschabschnitt in Kontakt kommt, so dass das Aufheizen des ersten Flanschabschnitts, und somit der gesamten Dichtungsanordnung, verringert werden kann. Sofern Kühlluft in den Freiraum geleitet wird, kann das Aufheizen noch weiter verringert werden.

Die Dichtungsanordnung kann ferner wenigstens ein in Bezug auf die Hauptströmungsrichtung des Arbeitsmediums hinter dem zweiten Flanschabschnitt angeordnetes scheibenartiges zweites Dichtmittel aufweisen, wobei das zweite Dichtmittel radial innen wenigstens teilweise am zweiten Flanschabschnitt anliegt und ein radial äußeres freies Ende aufweist, das in Radialrichtung über den zweiten Flanschabschnitt vorsteht und am Dichtabschnitt des Innendeckbandabschnitts anliegt. Das zweite Dichtmittel ist ähnlich oder gleichartig wie das erste Dichtmittel ausgebildet. Das zweite Dichtmittel bildet für den zweiten Flanschabschnitt ebenfalls eine Art Abdeckung.

Das zweite Dichtmittel kann radial außen einen gebogenen Abschnitt aufweisen, derart dass ein radial äußerer Endabschnitt, der das freie Ende enthält, im Wesentlichen in Axialrichtung verläuft. Dabei kann der radial äußere Endabschnitt in Axialrichtung so dimensioniert sein, dass das zweite Dichtmittel radial außen weiter von dem zweiten Flanschabschnitt entfernt ist als radial innen. Ferner kann in Radialrichtung zwischen dem zweiten Flanschabschnitt und dem gebogenen Abschnitt des zweiten Dichtmittels ein Freiraum gebildet sein. Damit die Dichtwirkung des zweiten Dichtmittels weiter verbessert werden kann, ist es auch denkbar, dass das zweite Dichtmittel derart vorgespannt ist, dass es sicher gegen den Dichtabschnitt gepresst wird, insbesondere auch dann, wenn der Druck des umgebenden Arbeitsmediums nicht so hoch ist.

Durch das erste Dichtmittel und das zweite Dichtmittel kann in Kombination ein radial außen liegender Freiraum gebildet werden, der das Durchströmen von heißem Arbeitsmedium nach dem Passieren der sekundären Dichtstelle ermöglicht.

Weiterbildend wird vorgeschlagen, dass das erste Dichtmittel oder/und das zweite Dichtmittel, der erste Flanschabschnitt und der zweite Flanschabschnitt mittels einer bolzenartigen oder schraubenartigen Verbindung mit dem Dichtabschnitt des Innendeckbandabschnitts verbunden sind. Dabei kann die bolzenartige oder schraubenartige Verbindung in Radialrichtung eine Relativbewegung des Dichtungsträgers zu dem Dichtabschnitt des Innendeckbandabschnitts ermöglicht. Die Verbindung zwischen de, Dichtungsträger und dem Dichtabschnitt kann insbesondere als Gleitsteinverbindung ausgebildet sein.

Die Dichtungsanordnung weist wenigstens einen rotorseitigen, insbesondere mit einer Laufschaufelanordnung der Gasturbine verbundenen, Dichtungsvorsprung auf, der in Radialrichtung gegenüber dem Dichtungselement des Dichtungsträgers angeordnet ist. Das Dichtelement und der Dichtvorsprung bilden eine sogenannte erste Dichtstelle der Dichtungsanordnung.

Der erste Flanschabschnitt und der zweite Flanschabschnitt können entlang der Umfangsrichtung eine sich verändernde Ausdehnung in Radialrichtung aufweisen. Die Flanschabschnitte weisen radial außen somit ein Profil entlang der Umfangsrichtung auf, bei dem sich Erhebungen und Ausnehmungen bzw. Berge und Täler abwechseln. Dabei sind das erste Dichtmittel und/oder das zweite Dichtmittel so ausgestaltet, dass sie in Radialrichtung sowohl über die Bereiche mit Ausnehmungen als auch über die Bereiche mit Erhebungen der Flanschabschnitte vorstehen. Durch das Vorsehen von Ausnehmungen in den Flanschabschnitten kann der zur Verfügung stehende und von dem ersten Dichtmittel oder/und dem zweiten Dichtmittel begrenzte Freiraum vergrößert werden. Zudem bewirkt eine gegenüber dem Stand der Technik reduzierte radiale Ausdehnung der Flanschabschnitte, dass sich diese im Betrieb der Gasturbine weniger stark aufheizen, da die Temperaturen radial außen, d.h. in der Nähe eines Hauptströmungskanals für das heiße Arbeitsmedium, größer sind als radial innen, wo die Temperaturen in der Regel über Kühlluftzufuhr verhältnismäßig gering gehalten wird. Die Erhebungen der Flanschabschnitte der erfindungsgemäßen Dichtungsanordnung brauchen nur so weit radial nach außen zu reichen, dass die Fläche, mit der sie sich mit dem Dichtabschnitt überdecken ausreicht, um die auf den Dichtungsträger wirkenden axialen Kräfte aufzunehmen.

Des Weiteren ist denkbar, dass in einem radial inneren Bereich, in dem das erste Dichtmittel am ersten Flanschabschnitt anliegt oder in dem das zweite Dichtmittel am zweiten Flanschabschnitt anliegt, Ausnehmungen oder Kanäle am ersten Flanschabschnitt oder am zweiten Flanschabschnitt vorgesehen sind, die dazu eingerichtet sind, kälteres Arbeitsmedium als Leckagestrom dem Dichtungsträger zuzuführen. Das kältere Arbeitsmedium wird dabei insbesondere aus einem radial inneren Bereich der Turbine zugeführt, der nicht dem Hauptströmungskanal entspricht.

Die Erfindung betrifft ferner auch eine Gasturbine, insbesondere Fluggasturbine, mit wenigstens einer oben beschriebenen Dichtungsanordnung, wobei vorzugsweise die Dichtungsanordnung zwischen zwei Stufen einer Turbine, insbesondere einer Niederdruckrubine angeordnet ist.

Die erfindungsgemäße Dichtungsanordnung ermöglicht durch das Vorsehen des ersten Dichtmittels, insbesondere weil sich die Fertigungstoleranzen besser kontrollieren lassen und eine Vorspannung vorgesehen ist, eine merklich verbesserte Dichtwirkung an der sekundären Dichtstelle als dies bei den Dichtungsanordnungen aus dem Stand der Technik der Fall ist. Dies wirkt sich in vorteilhafter Weise auch auf die Dichtwirkung der primären Dichtstelle aus und vergrößerte somit die Gesamtwirkung der Dichtungsanordnung. Durch die verbesserte Dichtwirkung der sekundären Dichtstelle und die Reduzierung der radialen Ausdehnung der beiden Flanschabschnitte des Dichtungsträgers kommt es nämlich zu einer Reduzierung der mittleren Temperatur des Dichtungsträgers und somit zu einer geringeren thermischen Ausdehnung desselben. Kann die thermische Ausdehnung des Dichtungsträger bei der Inbetriebnahme der Gasturbine auf ein ähnliches Maß wie an den rotorseitigen Dichtvorsprüngen reduziert werden, so kann der Spalt an der primären Dichtstelle minimal gehalten werden.

Nachfolgend wird die Erfindung unter Bezugnahme auf die anliegenden Figuren beispielhaft und nicht einschränkend beschrieben.
Fig. 1 zeigt in einer schematischen und vereinfachten Schnittdarstellung entlang der Axialrichtung eine Dichtungsanordnung gemäß dem Stand der Technik.
Fig. 2 zeigt in der Teilfigur A) einer schematischen und vereinfachten Schnittdarstellung entlang der Axialrichtung eine Ausführungsform einer erfindungsgemäßen Dichtungsanordnung und in der Teilfigur B) eine vergrößerte Prinzipdarstellung eines radial äußeren Bereichs eines ersten Dichtmittels.
Fig. 3 zeigt in einer schematischen und vereinfachten Ansicht in Axialrichtung auf die Dichtungsanordnung etwa entsprechend dem Pfeil III der Fig. 2.

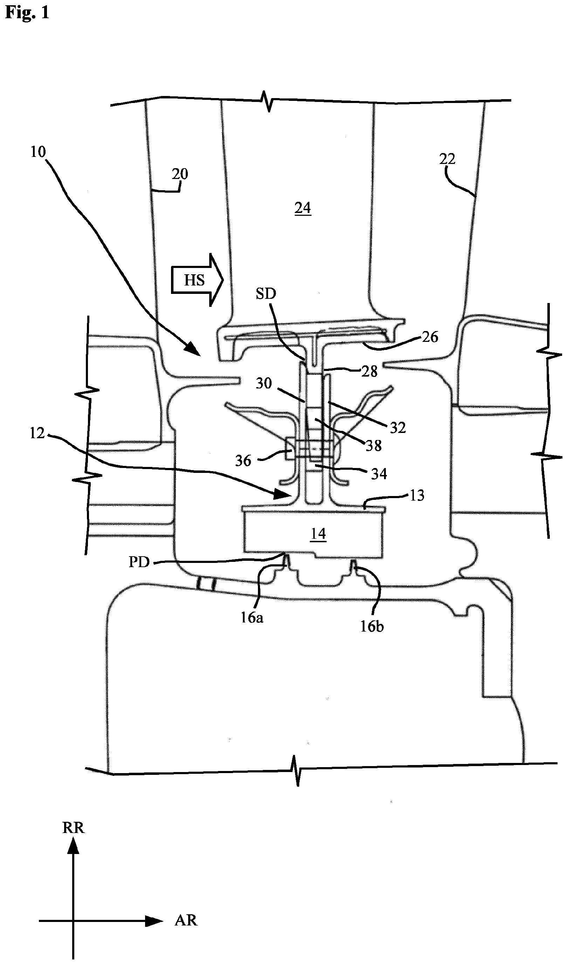

In Fig. 1 ist eine aus der einleitend genannten EP 2 696 039 A1 bekannte Dichtungsanordnung 10 schematisch und vereinfacht dargestellt. Die Dichtungsanordnung 10 umfasst einen insbesondere ringförmigen Dichtungsträger 12. An dem Dichtungsträger 12 ist radial innen ein Ringabschnitt 13 vorgesehen, an dem ein Dichtelement 14 angebracht ist. Das Dichtelement 14 ist sogenannt einlauffähig ausgebildet, so dass rotorseitig vorhandene Dichtvorsprünge 16a, 16b sich im Betrieb in das Dichtelement 14 einschleifen können. Das Dichtelement 14 und die Dichtvorsprünge 16a, 16b bilden ein sogenannte primäre Dichtstelle PD.

Rotorseitig sind in der Fig. 1 angedeutet eine Laufschaufel 20 einer ersten Rotorstufe und eine Laufschaufel 22 einer zweiten Rotorstufe. In Axialrichtung AR ist zwischen den beiden Laufschaufeln 20, 22 eine Leitschaufel 24 bzw. ein Leitschaufelsegment 24 angeordnet. Die Leitschaufel 24 weist einen Innendeckbandabschnitt 26 auf. Der Innendeckbandabschnitt 26 ist im Wesentlichen T-förmig ausgebildet. Er weist einen sich in Radialrichtung RR erstreckenden Dichtabschnitt 28 auf.

Der Dichtungsträger 12 umfasst einen ersten Flanschabschnitt 30 und einen zweiten Flanschabschnitt 32. Die beiden Flanschabschnitte 30, 32 sind mit dem Ringabschnitt 13 verbunden, insbesondere mit diesem einstückig ausgebildet. Zwischen den beiden Flanschabschnitten 30, 32 ist der Dichtabschnitt 28 des Innendeckbandabschnitts 26 aufgenommen. Ferner ist zwischen den beiden Flanschabschnitten 30, 32 ein sogenannter Gleitstein 34 befestigt, insbesondere mittels einer schraubenartigen oder bolzenartigen Verbindung 36. Der Gleitstein 34 greift in gabelförmige Öffnungen 38 am Dichtabschnitt 28 ein und bildet eine speichenzentrierte Lagerung des in Umfangsrichtung geschlossen ausgebildeten Dichtungsträgers 12 an dem Leitschaufelkranz, der durch eine Mehrzahl von Leitschaufeln 24 bzw. Leitschaufelsegmenten 24 gebildet ist.

Entlang der axialen Hauptströmungsrichtung HS herrscht stromaufwärts des Dichtungsträgers 12 ein höherer Druck P1 als der stromabwärtige Druck P2. Aufgrund des Drucks P1 wird im Betrieb der Turbine der erste Flanschabschnitt 30 gegen den Dichtabschnitt 28 gedrückt, und liegt an diesem an. Hierdurch wird radial außen eine sekundäre Dichtstelle SD gebildet zwischen einem freien Ende des ersten Flanschabschnitts 30 und dem Dichtabschnitt 28 des Innendeckbandabschnitts 26. Allerdings ist diese sekundäre Dichtstelle SD, zum Beispiel wegen unvermeidbarer Fertigungstoleranzen, nicht vollständig dicht, sondern erlaubt eine gewisse Durchströmung von heißem Arbeitsmedium, welches im Betrieb der Gastrubine zum Teil aus einem Hauptsrömungskanal in die die Kavität radial innen von dem Innendeckbandabschnitt 26 gelangen kann.

Eine Temperatur T1 von Arbeitsmedium radial außen im Bereich der sekundären Dichtstelle SD ist höher als eine Temperatur T2 radial innen im Bereich der primären Dichtstelle PD. Wie aus der Fig. 1 ersichtlich, ist beim Stand der Technik der erste Flanschabschnitt 30 und stromabwärts auch der zweite Flanschabschnitt 32 direkt dem vorbeiströmenden heißen Arbeitsmedium ausgesetzt. Dies führt zu einer Erhitzung im radial äußeren Bereich des Dichtungsträgers 12, so dass dieser sich ausdehnt, was insbesondere in Bezug auf eine damit einhergehende Spaltvergrößerung zwischen Dichtvorsprüngen 16a, 16b und dem Dichtelement 14 im Bereich der primären Dichtstelle PD nicht erwünscht ist.

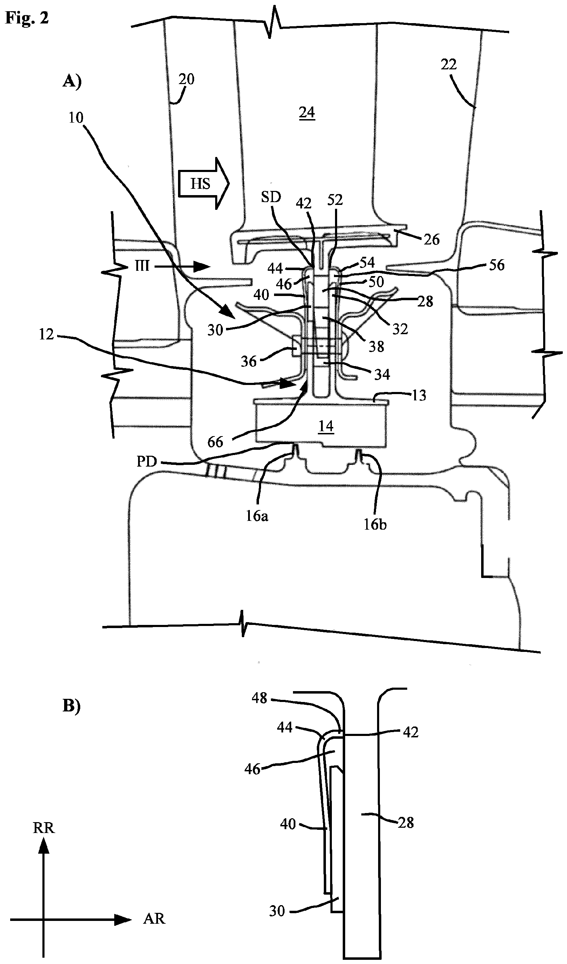

In der Fig. 2 ist eine Ausführungsform einer veränderten Dichtungsanordnung 10 dargestellt. Die Dichtungsanordnung 10 umfasst einen insbesondere ringförmigen Dichtungsträger 12. An dem Dichtungsträger 12 ist radial innen ein Ringabschnitt 13 vorgesehen, an dem ein Dichtelement 14 angebracht ist. Das Dichtelement 14 ist sogenannt einlauffähig ausgebildet, so dass rotorseitig vorhandene Dichtvorsprünge 16a, 16b sich im Betrieb in das Dichtelement 14 einschleifen können. Das Dichtelement 14 und die Dichtvorsprünge 16a, 16b bilden ein sogenannte primäre Dichtstelle PD.

Rotorseitig sind in der Fig. 2 angedeutet eine Laufschaufel 20 einer ersten Rotorstufe und eine Laufschaufel 22 einer zweiten Rotorstufe. In Axialrichtung AR ist zwischen den beiden Laufschaufeln 20, 22 eine Leitschaufel 24 bzw. ein Leitschaufelsegment 24 angeordnet. Die Leitschaufel 24 weist einen Innendeckbandabschnitt 26 auf. Der Innendeckbandabschnitt 26 ist im Wesentlichen T-förmig ausgebildet. Er weist einen sich in Radialrichtung RR erstreckenden Dichtabschnitt 28 auf.

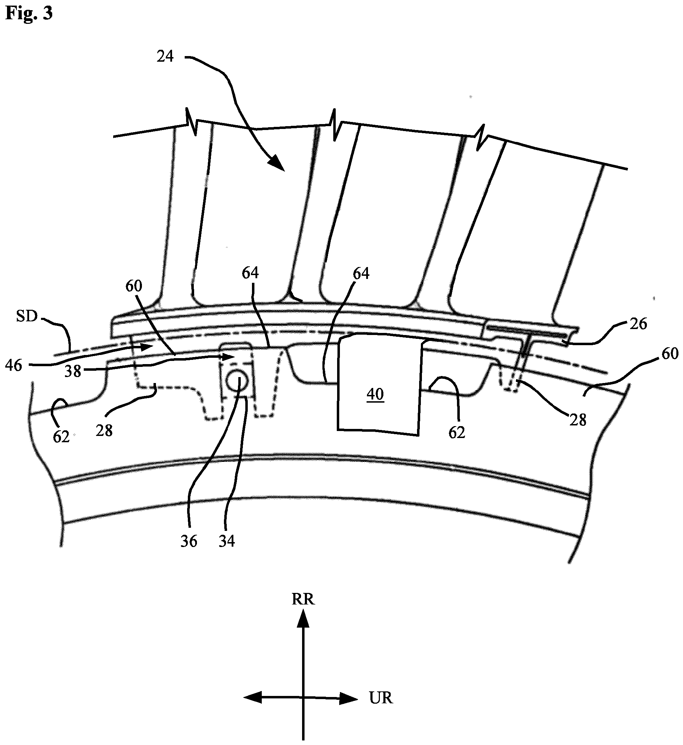

Der Dichtungsträger 12 umfasst einen ersten Flanschabschnitt 30 und einen zweiten Flanschabschnitt 32. Die beiden Flanschabschnitte 30, 32 sind mit dem Ringabschnitt 13 verbunden, insbesondere einstückig mit diesem ausgebildet. Zwischen den beiden Flanschabschnitten 30, 32 ist der Dichtabschnitt 28 des Innendeckbandabschnitts 26 aufgenommen. Ferner ist zwischen den beiden Flanschabschnitten 30, 32 ein sogenannter Gleitstein 34 befestigt, insbesondere mittels einer schraubenartigen oder bolzenartigen Verbindung 36. Der Gleitstein 34 greift in gabelförmige Öffnungen 38 am Dichtabschnitt 28 ein und bildet eine speichenzentrierte Lagerung des in Umfangsrichtung geschlossen ausgebildeten Dichtungsträgers 12 an dem Leitschaufelkranz, der durch eine Mehrzahl von Leitschaufeln 24 bzw. Leitschaufelsegmenten 24 gebildet ist (siehe auch Fig. 3).

Verglichen mit der Fig. 1 ist in der Ausführungsform insbesondere der erste Flanschabschnitt 30 kürzer ausgeführt in Radialrichtung RR. Die Dichtungsanordnung 10 entsprechend der in Fig. 2 gezeigten Ausführungsform umfasst ein erstes Dichtmittel 40. Das erste Dichtmittel 40 ist im Wesentlichen scheibenförmig ausgebildet. Radial außen steht das erste Dichtmittel 40 über den ersten Flanschabschnitt 30 vor. Es umfasst radial außen ein freies Ende 42. Das freie Ende schließt sich an einen gebogenen Abschnitt 44 an. Das erste Dichtmittel 40 bildet in dem Bereich, in dem das freie Ende 42 an dem Dichtabschnitt 28 des Innendeckbandabschnitts 26 anliegt, die sekundäre Dichtstelle SD. Wie aus der Fig. 2A und 2B (vergrößerte Prinzipdarstellung) ersichtlich, ist radial außen zwischen dem ersten Flanschabschnitt 30 und dem ersten Dichtmittel 40 ein Freiraum 46 gebildet. Das erste Dichtmittel 40 bildet somit eine Art Abdeckung des ersten Flanschabschnitts 30, so dass dieser nicht unmittelbar dem heißen Arbeitsmedium ausgesetzt ist.

Das erste Dichtmittel 40 ist im Bereich der schraubenartigen oder bolzenartigen Verbindung 36 mit dem Dichtungsträger 12 verbunden und liegt in dem radial inneren Bereich flächig am ersten Flanschabschnitt 30 an. Wie insbesondere aus der Fig. 2B) ersichtlich, sind der gebogene Abschnitt 44 und ein das freie Ende 42 aufweisender Endabschnitt 48 mit zunehmendem Abstand von ersten Flanschabschnitt 30 ausgeführt. Das erste Dichtmittel 40 ist in Richtung des Dichtabschnitts 28 vorgespannt, so dass das freie Ende 42 möglichst zuverlässig gegen den Dichtabschnitt 28 gedrückt wird, um den Durchtritt von heißem Arbeitsmedium im Bereich der sekundären Dichtstelle SD zu verringern.

Optional kann die Dichtungsanordnung auch ein in Fig. 2A) dargestelltes zweites Dichtmittel 50 aufweisen. Das zweite Dichtmittel 50 weist ebenfalls ein freies Ende 52 und einen gebogenen Abschnitt 54 auf. Das zweite Dichtmittel ist stromabwärts angeordnet und sein freies Ende 52 liegt am Dichtabschnitt 28 an. In Radialrichtung steht das zweite Dichtmittel 50 über den zweiten Flanschabschnitt 32 vor. Zwischen dem freien Ende 52 bzw. dem gebogenen Abschnitt 54 und dem zweiten Flanschabschnitt ist ein Freiraum 56 gebildet.

Die Funktionsweise des zweiten Dichtmittels 50 ist analog zu derjenigen des ersten Dichtmittels 40, insbesondere bildet das zweite Dichtmittel eine Art Abdeckung für den zweiten Flanschabschnitt 32, so dass dieser nicht unmittelbar dem heißen Arbeitsmedium ausgesetzt ist. Auch das zweite Dichtmittel 50 ist im Wesentlichen scheibenförmig ausgebildet. Ferner kann auch das weite Dichtmittel 50 in Richtung des Dichtabschnitts 28 des Innendeckbandabschnitts 26 vorgespannt sein.

Fig. 3 zeigt eine Draufsicht auf den ersten Flanschabschnitt 30 etwa entsprechend dem Pfeil III der Fig. 2., wobei in Fig. 3 das erste Dichtmittel 40 nur rechts teilweise und stark vereinfacht angedeutet ist, um den ersten Flanschabschnitt 30 nicht vollständig zu verdecken. Mit einer strichpunktierten Linie ist in Fig. 3 der Bereich dargestellt, entlang dem die sekundäre Dichtstelle SD durch das erste Dichtmittel 40, insbesondere dessen freies Ende 32, mit dem Dichtabschnitt 28 gebildet wird.

Der erste Flanschabschnitt 30 weist entlang der Umfangsrichtung UR abwechselnd Erhebungen 60 und Vertiefungen 62 auf, die in Radialrichtung RR unterschiedlich hoch ausgebildet sind. Eine Erhebung 60 ist insbesondere im Bereich der Kopplung mit dem Dichtabschnitt 28 des Innendeckbandabschnitts 26 vorgesehen. Aus der Fig. 3 ist auch ersichtlich, dass die strichpunktierte Linie, welche die Lage des sekundären Dichtstelle SD repräsentiert, einen größeren Radius aufweist als ein radial äußerer Rand 64 des ersten Flanschabschnitts 30. Somit ist zwischen der strichpunktierten Linie SD und dem ersten Flanschabschnitt entlang der Umfangrichtung ein Freiraum 46 vorhanden, der durch das erste Dichtmittel 40 abgedeckt wird.

Unter erneuter Bezugnahme auf die Fig. 2A) wird noch darauf hingewiesen, dass es denkbar ist, radial innen am ersten Flanschabschnitt 30 bei 66 Ausnehmungen oder Kanäle vorzusehen. Durch solche Ausnehmungen könnte kühlere Sekundärluft bzw. ein Kühlluftstrom von radial innen dem Dichtungsträger 12 zugeführt werden, so dass einer Erhitzung desselben weiter entgegengewirkt werden kann.

Die vorgestellte Dichtungsanordnung 10, wie sie unter Bezugnahme auf die Fig. 2 und 3 erläutert worden ist, führt insgesamt zu einer verbesserten Abdichtung im Bereich der sekundären Dichtstelle SD. Entsprechend kann nur eine geringe Menge von heißem Arbeitsmedium an der sekundären Dichtstelle passieren und in den Bereich des ersten Flanschabschnitts 30 bzw. des zweiten Flanschabschnitts 32 gelangen. Hierdurch kann einer Erhitzung der Flanschabschnitte 30, 32 entgegengewirkt werden. Dies hat zur Folge, dass der Dichtungsträger 12 sich in Radialrichtung weniger ausdehnt, so dass die Dichtwirkung an der primären Dichtstelle PD ebenfalls verbessert wird.

### Bezugszeichenliste

- 10: Dichtungsanordnung
- 12: Dichtungsträger
- 13: Ringabschnitt
- 14: Dichtelement
- 16a, 16b: Dichtvorsprung
- 20: Laufschaufel
- 22: Laufschaufel
- 24: Leitschaufel bzw. Leitschaufelsegment
- 26: Innendeckbandabschnitt
- 28: Dichtabschnitt
- 30: erster Flanschabschnitt
- 32: zweiter Flanschabschnitt
- 34: Gleitstein
- 36: schrauben oder bolzenartige Verbindung
- 38: gabelförmige Öffnung
- 40: erstes Dichtmittel
- 42: freies Ende
- 44: gebogener Abschnitt
- 46: Freiraum
- 48: Endabschnitt
- 50: zweites Dichtmittel
- 52: freies Ende
- 54: gebogener Abschnitt
- 56: Freiraum
- 60: Erhebung
- 62: Vertiefung
- 64: radial äußerer Rand
- 66: Bereich für Ausnehmungen bzw. Kanäle

## Patentansprüche

1. Dichtungsanordnung für eine Leitschaufelanordnung einer Gasturbine, insbesondere Fluggasturbine, vorzugsweise einer Niederdruckturbine einer Gasturbine, mit
einem Dichtungsträger (12), wobei der Dichtungsträger (12) einen sich in Axialrichtung (AR) und Umfangsrichtung (UR) erstreckenden Ringabschnitt (13) aufweist, an dem ein radial inneres Dichtungselement (14) angeordnet ist, und einen ersten Flanschabschnitt (30) und einen zweiten Flanschabschnitt (32) aufweist, die sich in Umfangsrichtung (UR) und Radialrichtung (RR) vom Ringabschnitt (13) nach außen erstrecken und in Axialrichtung (AR) zueinander in einem Abstand angeordnet sind, wobei in Bezug auf die Hauptströmungsrichtung (HS) eines Arbeitsmediums der erste Flanschabschnitt (30) vor dem zweiten Flanschabschnitt (32) angeordnet ist,
wenigstens einem rotorseitigen, insbesondere mit einer Laufschaufelanordnung (20, 22) der Gasturbine verbundenen, Dichtungsvorsprung (16a, 16b), der in Radialrichtung (RR) gegenüber dem Dichtungselement (14) des Dichtungsträgers (12) angeordnet ist, so dass eine primäre Dichtstelle (PD) gebildet ist,
einem Innendeckbandabschnitt (26) von wenigstens einer Leitschaufel (24) oder von wenigstens einem Leitschaufelsegment (24) der Leitschaufelanordnung, wobei der Innendeckbandabschnitt (26) einen sich in Radialrichtung (RR) nach innen und in Umfangsrichtung (UR) erstreckenden Dichtabschnitt (28) aufweist, wobei der Dichtabschnitt (28) zwischen dem ersten Flanschabschnitt (30) und dem zweiten Flanschabschnitt (32) des Dichtungsträgers (12) aufgenommen ist und mit diesen verbunden ist, **dadurch gekennzeichnet, dass**
die Dichtungsanordnung (10) wenigstens ein in Bezug auf die Hauptströmungsrichtung (HS) des Arbeitsmediums vor dem ersten Flanschabschnitt (30) angeordnetes, bezogen auf die Radialrichtung (RR) und die Umfangsrichtung (UR) scheibenartiges, erstes Dichtmittel (40) aufweist, wobei das erste Dichtmittel (40) radial innen wenigstens teilweise flächig am ersten Flanschabschnitt (30) anliegt und ein radial äußeres freies Ende (42) aufweist, das in Radialrichtung (RR) über den ersten Flanschabschnitt (30) vorsteht und am Dichtabschnitt (28) des Innendeckbandabschnitts (26) als Dichtkante unter Ausbildung einer sekundären Dichtstelle (SD) anliegt, wobei das erste Dichtmittel (40) radial außen einen gebogenen Abschnitt (44) aufweist und einen radial äußeren Endabschnitt (48), der das freie Ende (42) enthält, wobei der radial äußere Endabschnitt (48) im Wesentlichen in Axialrichtung (AR) verläuft und in Axialrichtung (AR) so dimensioniert ist, dass das erste Dichtmittel (40) radial außen weiter von dem ersten Flanschabschnitt (30) entfernt ist als radial innen und in Richtung des Dichtabschnitts (28) vorgespannt ist, wobei in Radialrichtung (RR) zwischen dem ersten Flanschabschnitt (30) und dem gebogenen Abschnitt (44) des ersten Dichtmittels (40) ein Freiraum (46) gebildet ist und das erste Dichtmittel (40) eine Abdeckung für den ersten Flanschabschnitt (30) bildet.

2. Dichtungsanordnung nach Anspruch 1, **dadurch gekennzeichnet, dass** sie wenigstens ein in Bezug auf die Hauptströmungsrichtung (HS) des Arbeitsmediums hinter dem zweiten Flanschabschnitt (32) angeordnetes, bezogen auf die Radialrichtung (RR) und die Umfangsrichtung (UR) scheibenartiges, zweites Dichtmittel (50) aufweist, wobei das zweite Dichtmittel (50) radial innen wenigstens teilweise am zweiten Flanschabschnitt (32) flächig anliegt und ein radial äußeres freies Ende (52) aufweist, das in Radialrichtung (RR) über den zweiten Flanschabschnitt (32) vorsteht und am Dichtabschnitt (28) des Innendeckbandabschnitts (26) als Dichtkante unter Ausbildung einer weiteren Dichtstelle anliegt.

3. Dichtungsanordnung nach Anspruch 2, **dadurch gekennzeichnet, dass** das zweite Dichtmittel (50) radial außen einen gebogenen Abschnitt (54) aufweist und einen radial äu-ßeren Endabschnitt, der das freie Ende (52) enthält, wobei der radial äußere Endabschnitt im Wesentlichen in Axialrichtung (AR) verläuft.

4. Dichtungsanordnung nach Anspruch 3, **dadurch gekennzeichnet, dass** der radial äußere Endabschnitt in Axialrichtung (AR) so dimensioniert ist, dass das zweite Dichtmittel (50) radial außen weiter von dem zweiten Flanschabschnitt (32) entfernt ist als radial innen und in Richtung des Dichtabschnitts (28) vorgespannt ist.

5. Dichtungsanordnung nach Anspruch 3 oder 4, **dadurch gekennzeichnet, dass** in Radialrichtung (RR) zwischen dem zweiten Flanschabschnitt (32) und dem gebogenen Abschnitt (54) des zweiten Dichtmittels ein Freiraum (56) gebildet ist und das zweite Dichtmittel (50) eine Abdeckung für den zweiten Flanschabschnitt (32) bildet.

6. Dichtungsanordnung nach Anspruch 1 oder nach einem der Ansprüche 2 bis 5, **dadurch gekennzeichnet, dass** das erste Dichtmittel (40) oder/und das zweite Dichtmittel (50), der erste Flanschabschnitt (30) und der zweite Flanschabschnitt (32) mittels einer bolzenartigen oder schraubenartigen Verbindung (36) mit dem Dichtabschnitt (28) des Innendeckbandabschnitts (26) verbunden sind.

7. Dichtungsanordnung nach Anspruch 6, **dadurch gekennzeichnet, dass** die bolzenartige oder schraubenartige Verbindung (36) in Radialrichtung (RR) eine Relativbewegung des Dichtungsträgers (12) zu dem Dichtabschnitt (28) des Innendeckbandabschnitts (26) ermöglicht.

8. Dichtungsanordnung nach Anspruch 7, **dadurch gekennzeichnet, dass** die Verbindung (36) zwischen dem Dichtungsträger (12) und dem Dichtabschnitt (28) als Gleitsteinverbindung (34) ausgebildet ist.

9. Dichtungsanordnung nach einem der vorhergehenden Ansprüche, **dadurch gekennzeichnet, dass** der erste Flanschabschnitt (30) und der zweite Flanschabschnitt (32) entlang der Umfangsrichtung (UR) eine sich verändernde Ausdehnung in Radialrichtung (RR) aufweist mit abwechselnden Erhebungen (60) und Vertiefungen (62).

10. Gasturbine, insbesondere Fluggasturbine, mit wenigstens einer Dichtungsanordnung (10) nach einem der vorhergehenden Ansprüche, wobei vorzugsweise die Dichtungsanordnung (10) zwischen zwei Stufen (20, 22) einer Turbine, insbesondere einer Niederdruckrubine angeordnet ist.

## Claims

1. Sealing arrangement for a guide vane arrangement of a gas turbine, in particular an aircraft gas turbine, preferably a low-pressure turbine of a gas turbine, comprising a seal support (12), the seal support (12) having a ring portion (13) which extends in the axial direction (AR) and circumferential direction (UR) and on which a radially inner sealing element (14) is arranged, and having a first flange portion (30) and a second flange portion (32) which extend outwardly from the ring portion (13) in the circumferential direction (UR) and radial direction (RR) and are arranged at a distance from one another in the axial direction (AR), the first flange portion (30) being arranged in front of the second flange portion (32) with respect to the main direction of flow (HS) of a working fluid, comprising at least one sealing projection (16a, 16b) on the rotor side, in particular connected to a rotor blade arrangement (20, 22) of the gas turbine, which projection is arranged in the radial direction (RR) relative to the sealing element (14) of the seal support (12) such that a primary seal point (PD) is formed, comprising an inner shroud portion (26) of at least one guide vane (24) or of at least one guide vane segment (24) of the guide vane arrangement, the inner shroud portion (26) having a sealing portion (28) that extends inwardly in the radial direction (RR) and circumferential direction (UR), the sealing portion (28) being housed between the first flange portion (30) and the second flange portion (32) of the seal support (12) and being connected to said portions, **characterized in that** the sealing arrangement (10) comprises at least a first sealing means (40) that is arranged in front of the first flange portion (30) with respect to the main direction of flow (HS) of the working fluid and is disk-like based on the radial direction (RR) and circumferential direction (UR), the first sealing means (40) radially inwardly abutting, at least in part, the first flange portion (30) in a planar manner and comprising a radially outer free end (42) that projects beyond the first flange portion (30) in the radial direction (RR) and abuts the sealing portion (28) of the inner shroud portion (26) as a sealing edge, forming a secondary seal point (SD), the first sealing means (40) comprising, radially outwardly, a bent portion (44) and a radially outer end portion (48) that contains the free end (42), the radially outer end portion (48) extending substantially in the axial direction (AR) and being dimensioned in the axial direction (AR) in such a way that the first sealing means (40) is more remote from the flange portion (30) radially outwardly than radially inwardly and is pretensioned in the direction of the sealing portion (28), a free space (46) being formed in the radial direction (RR) between the first flange portion (30) and the bent portion (44) of the first sealing means (40) and the first sealing means (40) forming a cover for the first flange portion (30).

2. Sealing arrangement according to claim 1, **characterized in that** it comprises at least a second sealing means (50) that is arranged behind the second flange portion (32) with respect to the main direction of flow (HS) of the working fluid and is disk-like based on the radial direction (RR) and circumferential direction (UR), the second sealing means (50) radially inwardly abutting, at least in part, the second flange portion (32) in a planar manner and comprising a radially outer free end (52) that projects beyond the second flange portion (32) in the radial direction (RR) and abuts the sealing portion (28) of the inner shroud portion (26) as a sealing edge, forming an additional seal point.

3. Sealing arrangement according to claim 2, **characterized in that** the second sealing means (50) comprises, radially outwardly, a bent portion (54) and a radially outer end portion that contains the free end (52), the radially outer end portion extending substantially in the axial direction (AR).

4. Sealing arrangement according to claim 3, **characterized in that** the radially outer end portion is dimensioned in the axial direction (AR) in such a way that the second sealing means (50) is more remote from the second flange portion (32) radially outwardly than radially inwardly and is pretensioned in the direction of the sealing portion (28).

5. Sealing arrangement according to either claim 3 or claim 4, **characterized in that** a free space (56) is formed in the radial direction (RR) between the second flange portion (32) and the bent portion (54) of the second sealing means, and the second sealing means (50) forms a cover for the second flange portion (32).

6. Sealing arrangement according to claim 1 or any of claims 2 to 5, **characterized in that** the first sealing means (40) and/or the second sealing means (50), the first flange portion (30) and the second flange portion (32) are connected to the sealing portion (28) of the inner shroud portion (26) by a bolt-type or screw-type connection (36).

7. Sealing arrangement according to claim 6, **characterized in that** the bolt-type or screw-type connection (36) allows the seal support (12) to move relative to the sealing portion (28) of the inner shroud portion (26) in the radial direction (RR).

8. Sealing arrangement according to claim 7, **characterized in that** the connection (36) between the seal support (12) and the sealing portion (28) is designed as a sliding-block connection (34).

9. Sealing arrangement according to any of the preceding claims, **characterized in that** the first flange portion (30) and the second flange portion (32), in the circumferential direction (UR), have a varying extension in the radial direction (RR) with alternating elevations (60) and depressions (62).

10. Gas turbine, in particular an aircraft gas turbine, comprising at least one sealing arrangement (10) according to any of the preceding claims, the sealing arrangement (10) preferably being arranged between two stages (20, 22) of a turbine, in particular a low-pressure turbine.

## Revendications

1. Dispositif d'étanchéité pour un dispositif à aubes directrices d'une turbine à gaz, en particulier d'une turbine à gaz d'avion, de préférence d'une turbine à gaz basse pression d'une turbine à gaz, comportant
un support d'étanchéité (12), ledit support d'étanchéité (12) comportant une section annulaire (13) s'étendant dans la direction axiale (DA) et dans la direction circonférentielle (DC), sur laquelle est disposé un élément d'étanchéité (14) radialement intérieur et comportant une première partie de bride (30) et une seconde partie de bride (32) qui s'étendent dans la direction circonférentielle (DC) et dans la direction radiale (DR) depuis la section annulaire (13) vers l'extérieur et dans la direction axiale (DA) l'une vers l'autre sur une distance où, par rapport à la direction d'écoulement principale (EP) du fluide de travail, la première partie de bride (30) est disposée avant la seconde partie de bride (32),
avec au moins une saillie d'étanchéité (16a, 16b) disposée du côté du rotor, notamment liée à une disposition d'aubes mobiles (20, 22) de la turbine à gaz, ladite saillie d'étanchéité (16a, 16b) étant disposée en direction radiale (DR) contre l'élément d'étanchéité (14) du support d'étanchéité (12) afin de créer une première zone d'étanchéité (ZE),
une bande de recouvrement intérieure (26) composée d'au moins une aube (24) ou d'au moins un segment d'aube (24) de la disposition d'aubes de sorte que la bande de recouvrement intérieure (26) présente une section d'étanchéité qui s'étend en direction radiale (DR) vers l'intérieur et en direction circonférentielle (DC), ladite section d'étanchéité (28) étant comprise et liée entre la première section de bande (30) et la seconde section de bande (32) du support d'étanchéité (12), **caractérisée en ce que**
le dispositif d'étanchéité (10) comprend un premier support d'étanchéité (40) en forme de disque par rapport à la direction radiale (DR) et la direction circonférentielle (DC), disposé avant la première partie de bride (30) par rapport à la direction d'écoulement principale (EP) du fluide de travail, le premier support d'étanchéité (40) étant disposé de façon radiale, interne et au moins partiellement à plat sur la première partie de bride (30) et présentant une extrémité (42) extérieure radiale libre, qui repose en direction radiale (DR) devant la première partie de bride (30) et sur la section d'étanchéité (28) de la bande de recouvrement intérieure (26), où elle fait office de côté étanche pour la formation d'une seconde zone d'étanchéité (ZE), le premier support d'étanchéité (40) présentant une section courbée (44) radiale externe et une extrémité extérieure radiale (48), comprenant l'extrémité libre (42) et disposée principalement en direction axiale (DA) et positionnée dans cette direction de telle façon que le premier support d'étanchéité (40) externe radial est éloigné de la section de bride (30) et interne, radial et précontraint dans le sens de la section d'étanchéité (28), de sorte qu'un espace libre (46) est créé en direction radiale (DR) entre la première section de bride (30) et la section recourbée (44) du premier support d'étanchéité (40) et que le premier support d'étanchéité (40) forme une couverture pour la première partie de bride (30).

2. Dispositif d'étanchéité selon la revendication 1, **caractérisé en ce qu'**il comporte au moins un second moyen d'étanchéité (50) qui est disposé derrière la seconde partie de bride (32) par rapport à la direction d'écoulement principale (EP) du fluide de travail et est en forme de disque par rapport à la direction radiale (DR) et la direction circonférentielle (DC), le second moyen d'étanchéité (50) en forme de cercle reposant au moins partiellement radialement sur la seconde partie de bride (32) et ayant une extrémité libre (52) extérieure radiale qui dépasse la seconde partie de bride (32) en direction radiale (DR) et repose sur la section d'étanchéité (28) de la bande de recouvrement intérieure (26) pour la formation d'une zone d'étanchéité supplémentaire.

3. Dispositif d'étanchéité selon la revendication 2, **caractérisé en ce que** le second moyen d'étanchéité (50) comprend une partie incurvée radialement extérieure (54) et une partie d'extrémité radialement extérieure incluant l'extrémité libre (52), la partie d'extrémité radialement extérieure s'étendant sensiblement dans une direction axiale (DR).

4. Dispositif d'étanchéité selon la revendication 3, **caractérisé en ce que** la partie d'extrémité radialement extérieure est dimensionnée dans la direction axiale (DA) de telle sorte que le second moyen d'étanchéité (50) est radialement plus éloigné vers l'extérieur de la seconde partie de bride (32) que radialement vers l'intérieur et est précontraint dans la direction de la partie d'étanchéité (28).

5. Dispositif d'étanchéité selon la revendication 3 ou 4, **caractérisé en ce qu'**un espace libre (56) est formé dans la direction radiale (DR) entre la seconde partie de bride (32) et la partie recourbée (54) du second moyen d'étanchéité et le second moyen d'étanchéité (50) forme un couvercle pour la seconde partie de bride (32).

6. Dispositif d'étanchéité selon la revendication 1 ou selon l'une des revendications 2 à 5, **caractérisé en ce que** le premier moyen d'étanchéité (40) et/ou le second moyen d'étanchéité (50), la première partie de bride (30) et la seconde partie de bride (32) sont reliés à la partie d'étanchéité (28) de la bande de recouvrement intérieure (26) par une liaison (36) en forme de vis.

7. Dispositif d'étanchéité selon la revendication 6, **caractérisé en ce que** la liaison (36) en forme de boulon ou d'hélice dans la direction radiale (DR) permet un mouvement relatif du support d'étanchéité (12) par rapport à la partie d'étanchéité (28) de la bande de recouvrement intérieure (26).

8. Dispositif d'étanchéité selon la revendication 7, **caractérisé en ce que** la liaison (36) entre le support d'étanchéité (12) et la section d'étanchéité (28) est réalisée sous la forme d'une liaison coulissante (34).

9. Dispositif d'étanchéité selon l'une des revendications précédentes, **caractérisé en ce que** la première partie de bride (30) et la seconde partie de bride (32) ont une étendue variable en direction radiale (DR) le long de la direction circonférentielle (DC) avec des élévations (60) et des dépressions (62) alternées.

10. Turbine à gaz, en particulier turbine à gaz d'avion, comportant au moins un dispositif d'étanchéité (10) selon l'une des revendications précédentes, le dispositif d'étanchéité (10) étant de préférence disposé entre deux étages (20, 22) d'une turbine, en particulier une turbine basse pression.
